# EUROPEAN PATENT APPLICATION

(11) **EP 1 918 062 A1**
(43) Date of publication of application: **07.05.2008**
(21) Application number: 07388017.1
(22) Date of filing: 28.03.2007
(51) Int. Cl.: B23K 26/06

(54) **Method and system for laser processing**

(30) Priority: 30.10.2006 DK 200601399
(71) Applicant: Danmarks Tekniske Universitet, 2800 Kgs. Lyngby (DK)
(72) Inventor: Olsen, Flemming Ove Elholm, 4180 Soro (DK)
(74) Representative: Jensen, Peter Kim

(57) **Abstract**

The invention relates to laser processing, such as cutting or welding, using multiple laser beams directed to a processing region. At least one first laser beam (2) is coupled into the work piece (1) material to generate a melt (5) and to form a keyhole (3). At least one second beam (6) is guided onto selected surface regions (7) of the melt (5). The laser energy is provided to the processing region as individual beams that may be conditioned independently. The invention has the advantage that arbitrary energy distributions can be arranged in the processing region as determined according to the requirements of the process, such as cutting or welding, rather than being limited by an inappropriate beam shape of a single high power laser beam.

## Description

The present invention relates to a method and system for laser processing, especially for laser cutting and welding.

Laser processing, such as laser cutting and laser welding, is widely used for processing a variety of materials. The lasers typically used for laser processing are CO₂ lasers or Nd-YAG lasers.

However, the CO₂ laser has the disadvantage that the beam is strongly absorbed in plumes of metal vapour, readily ionizing molecules in the plume and thus generating even more absorbing plasma.

One major problem of the Nd-YAG laser is that it is difficult to manufacture a high power laser having a good beam quality as for example expressed by a low M² value.

As an example are lasers, such as CO₂ lasers or Nd-YAG lasers widely used for laser cutting virtually all kinds of material, irrespective if they are electrically conducting or non-conducting, hard or soft. A typical set-up for laser cutting comprises a laser, beam guidance and focussing optics, and means for moving the laser beam and the work piece with respect to each other. In a melt-and-blow-type process the laser cutting is aided by an assist gas jet through a nozzle which is concentrically arranged around the laser beam in order to blow the molten material out of the kerf.

Cut depth and processing speed are determined by the energy absorbed by the work piece and the capability of removing the molten material from the kerf. In known laser cutting processes these challenges are met by increasing the laser power and the pressure of the assist gas. A number of limitations are encountered by this procedure.

One limitation is the formation of an excessive vaporisation plume within and out of the kerf, obscuring the optical path of the processing beam on its way to the cut-front. This is particularly the case for processes based on keyhole-formation. Absorption of laser energy by the vapour will lead to ionisation of molecules in the vapour generating even more absorbing plasma.

Furthermore, the assist gas suffers a pressure drop in the nozzle itself, in the region between the nozzle and the work piece surface, and on its way into and through the kerf. In deep kerfs it is therefore difficult to achieve an assist gas pressure at the bottom of the kerf that is sufficient to effectively remove the material molten by the processing beam. These limitations affect the cut quality, leading to defects, such as rough cutting edges or burrs.

Further disc lasers and fibre lasers are known having a very low beam parameter product. (BPP). However, power of known single mode fibre lasers is limited to less than 1000 W. When higher power is desired, a plurality of single mode lasers is bundled or coupled into a larger fibre, whereby the quality of the beam decreases drastically.

Object of the invention is to provide a method for laser processing overcoming the above mentioned limitations.

This is according to the invention obtained by a method for laser processing using multiple laser beams guided to a processing region. At least two laser beams are coupled into the processing region, whereby a melt is generated and at least one keyhole is formed.

For the sake of simplicity the following terms are used to describe the laser process.

The laser processing is applied to a work piece or a number of abutting or overlapping work pieces along a processing curve by moving the laser beams with respect to the at least one work piece in a processing direction along said processing curve.

The at least one work piece is typically made of a sheet material that may be planar or have a curved or otherwise three-dimensional shape. The plane of the work piece at a given point on the work piece is defined as the tangential plane to the work piece in said point. The work piece surface normal in said point is defined as the corresponding normal vector on the tangential plane pointing in a direction away from the work piece.

In each point of the processing curve the tangent to the processing curve gives the corresponding processing direction for said point. The processing direction is parallel to the plane of the work piece surface and orthogonal to the corresponding work piece surface normal in said point.

The term "horizontal" refers to directions substantially parallel to the plane of the work piece. The term "longitudinal" refers to horizontal directions that are substantially parallel to the processing direction. The term "lateral" refers to arrangements characterised by a horizontal distribution of elements. The term "vertical" refers to directions substantially perpendicular to the plane of the work piece.

The at least one work piece has a first side facing a first half-space and a second side facing a second half-space. In this application, the first side is referred to as the front side, and the second side is referred to as the back side of the work piece. The first half-space is referred to as "upper" or "above" and the second half-space is referred to as "lower" or "below". Directions having a vector component pointing from the upper to the lower half-space are referred to as "downward", directions having a vector component pointing from the lower half-space to the upper half-space are referred to as "upward". Directions having a vector component parallel to the processing direction are referred to as "forward", and directions having a vector component that is anti-parallel to the processing direction are referred to as "backward".

In one aspect of the invention said laser processing is laser cutting of a work piece in a cutting direction. At least one first laser beam, the so-called melting beam, is coupled into the work piece material to generate a melt and to form a melt flow around the melting beam and partially or totally form a keyhole. The energy of at least one second laser beam, the so-called melt ejection beam, is guided onto and distributed over one or more selected surface regions of the melt, whereby material is evaporated from the surface of the material generating an evaporation-pressure forcing the melt out of the processing region, thereby forming a kerf. The kerf comprises a cut-front and sidewalls.

By moving the multiple laser beams and the work piece with respect to each other the kerf is formed in a cutting direction along the cutting curve. Above mentioned definitions for laser processing apply correspondingly for laser cutting.

The melting beam melts the work piece material at the cut-front. The melt is driven away from the cut-front and can flow in a downward direction out of the kerf and/or in a horizontal backward direction around the melting beam along the sidewalls of the kerf, eventually enclosing the melting beam.

By locally heating the surface of the melt with the melt ejection beam material is evaporated from the melt surface. The recoil of the particles thus forced to leave the surface of the melt generate a substantial gas pressure in immediate vicinity of the melt surface, in a layer which is known as the so-called Knudsen-layer. This evaporation-pressure drives the melt flow in the desired direction, effectively blowing the melt away and out of the kerf.

Advantageously according to the invention, the melt ejection beam can be guided to selected surface regions of the melt in order to generate and provide the evaporation-pressure right where it is required for driving the melt flow. To this end, the spatial distribution of the energy provided by the at least one melt ejection beam can be arranged by selecting a cross-sectional shape of the at least one melt-ejection beam, by shaping a cross-sectional power density distribution (beam profile), and/or by arranging a plurality of melt ejection sub-beams. For example, a melt ejection beam with a Gaussian beam profile may be chosen to have a diameter exceeding the melt pool width, such that the power density in the wings of the Gaussian beam profile lying outside the melt pool does not exceed the threshold for melting the solid work piece material while the remaining core of the Gaussian beam provides a power density sufficient to evaporate material from the melt surface in order to eject the melt from the kerf.

Other configurations for controlling melt flow and melt ejection with a more complex spatial distribution of the melt ejection power density can be conceived. Such configurations may comprise arrangements of multiple melt ejection sub-beams, including sub-beams with a non-Gaussian beam profile.

The laser power provided in the melting beam and the melt ejection beam may also be modulated in time in order to control the energy transferred to the work piece for melting, melt flow control and melt ejection. Both the at least one melting beam and the at least one melt ejection beam may be provided from continuous wave (cw) or pulsed laser sources.

The pressure provided by laser evaporation can by far exceed the pressure which can be achieved with assist gas inside a narrow kerf. The melt ejection in the method according to the invention is therefore more efficient than known processes employing assist gas ejection. The method according to the invention has the additional advantage that it allows for remote laser cutting without assist gas. In cases where assist gas is required in the process for other reasons, the process according to the invention at least reduces the consumption of assist gas substantially.

Preferably, the melt ejection beam is guided onto selected surface regions behind the melting beam, i.e. opposite to the cut-front, and will in practice be directed in a vertical direction or in a direction tilted slightly out of the vertical direction in order to remove the molten material from the kerf in a downward direction before it resolidifies. This arrangement is particularly advantageous for melt ejection at high cutting rates and/or in deep kerfs when the melt flow away from the cut-front occurs predominantly in a horizontal direction around the melting beam and along the sidewalls of the kerf.

Further, according to the invention, at least two melt ejection beams are arranged to follow the melting beam along the sidewalls of the kerf. These melt ejection beams generate an evaporation pressure for ejecting at least a part of the melt flowing along the sidewalls of the kerf. These laser beams can simultaneously act as trimming beams in order to thermally process the sidewalls of the kerf within the same step as cutting. The trimming beams allow for additional laser processing in order to avoid and/or remove burrs and striations, and in order to clean the cut-edges.

In a further development of the above embodiment the at least one melting beam has a beam parameter product less than 10 mm*mrad, alternative less than 5 mm*mrad, alternative less than 1 mm*mrad. In lasers characterised by such a low beam parameter product the laser energy can be concentrated onto a considerably smaller focal spot requiring less total power as compared to traditional lasers applied for cutting, yet achieving comparable or even higher intensities in the focal spot. Applying a laser with a low beam parameter product as a melting beam is advantageous for the melting process, since for a given laser power higher intensities can be achieved when focussing the laser to a focal spot. The thereby achieved higher intensity results in faster cut-front propagation. Furthermore, the keyhole formation can be achieved at smaller laser powers and with less plasma formation. A further advantage is that due to the smaller beam width a smaller kerf can be obtained. An efficient melt ejection from the narrow kerf is achieved by means of the melt ejection beam.

Lasers with the above-mentioned small beam parameter product are in this application referred to as high-intensity lasers. Examples thereof are disc lasers and fibre lasers.

In a further development of the above embodiment at least the melting beam and/or the at least one melt ejection beam is provided by a fibre-laser. Modern fibre lasers can provide laser beams characterised by a low beam parameter product. Examples are single mode fibre lasers with a beam parameter product of 0,4 mm*mrad at wavelengths of 1 µm - 1,5 µm, in practice typically 1,07µm.

In a further development of the above embodiment the at least one melting beam and/or the at least one melt ejection beam is provided by a disc-laser.

Further according to one aspect of the invention, the melting beam comprises a number of laterally arranged sub-beams. A lateral arrangement of sub-beams allows for controlling the melt-formation and the melt-flow by adapting the beam intensity profile.

In a further development of the above embodiment each of the lateral sub-beams is adapted to generating a separate keyhole. For certain cutting applications it is desirable to have a wider melting zone. In such applications, rather than increasing the intensity and the beam width of a single beam, it can be advantageous to generate a number of laterally arranged smaller keyholes simultaneously within the same melt pool, because the lateral arrangement of keyholes acts to stabilize the melt flow. In an arrangement of smaller keyholes the melt flow path within each keyhole from the cut-front to the melt pool behind the melting beam is shorter than in a corresponding single beam arrangement with the same melt pool size. As a consequence, the melt mass transport away from the cut-front is more efficient keeping the melt layer thickness at the cut-front low, thereby enhancing the coupling efficiency for coupling laser energy into the work piece material at the cut front, and thereby increasing the cutting speed. Furthermore, the power within each of the lateral sub-beams is much smaller than in a corresponding single beam arrangement with the same melt pool size. The distributed keyhole formation therefore avoids excessive plasma formation as compared to a single beam arrangement.

Further according to one aspect of the invention, the melting beam comprises a number of sub-beams that are longitudinally arranged essentially in line with the cutting direction and directed to the same keyhole.

In a further development of the above embodiment the focal spots of the longitudinally arranged sub-beams are arranged in different vertical levels of the work piece. In a vertical arrangement of melting sub-beams in the same keyhole the laser energy for melting and evaporation is vertically distributed over the cut-front. Vapour plume and plasma formation is thereby reduced and a high intensity can more easily be maintained down through the keyhole. Therefore higher penetration depths, higher cutting speed, and cleaner cuts are achieved by this arrangement as compared to known laser cutting methods.

In a further embodiment according to the invention the laser energy from at least one of the melting beams and/or melt ejection beams is provided in pulses.

In practice, the following combinations of melting beam characteristics and melt ejection beam characteristics may be contemplated. The below descriptions of the beam intensity profile are not to be understood strictly, but as to essentially describe the characteristics of the corresponding laser beam.

**Table 1**

| **Beam characteristics** | **Melting beam** | **Melt ejection beam** |
|---|---|---|
| Power mode | Continuous | Continuous |
| | Continuous | Pulsed |
| | Pulsed | Pulsed |
| | Pulsed | Continuous |
| Beam intensity profile | Gaussian | Gaussian |
| | Gaussian | Homogeneous |
| | Gaussian | Homogeneous across kerf Other parallel to cutting direction |
| Beam cross-sectional shape (in the kerf) | Round | Round |
| | Round | Rectangular |
| | Round | Elliptic |

Further according to one aspect of the invention, the at least one melting beam and/or the at least one melt ejection beam is linearly polarised. Employing linearly polarised light in a laser cutting method according to the invention allows for optimizing the coupling of the laser light into the material in accordance with requirements of a given application. A further advantage of using linearly polarised light is that a Faraday-isolator can be used to prevent back-reflected light from entering the transmitting fibres and/or the laser cavity.

In a preferred embodiment according to the invention, the at least one melting beam is linearly polarised in a direction parallel to the plane of incidence, wherein the plane of incidence at each instant is aligned with the direction of the cut. A melting beam that is linearly polarised parallel to the plane of incidence, i.e. with the electric field oscillating in the plane of incidence (p-polarisation), increases the laser energy coupled into the work piece material at the cut-front, thus enhancing cutting speed.

In another preferred embodiment according to the invention, the at least one melting beam is linearly polarised in a direction perpendicular to the plane of incidence, wherein the plane of incidence at each instant is aligned with the direction of the cut. A melting beam that is linearly polarised perpendicular to the plane of incidence, i.e. with the electric field oscillating perpendicular to the plane of incidence (s-polarisation), increases the laser energy coupled into the work piece material on either side of the melting beam, but not at the cut-front. An s-polarised melting beam therefore results in an increased kerf width at the expense of a reduced cutting speed.

Other orientations of the melting beam polarisation may be chosen resulting in energy absorption that is asymmetric with respect to the cutting direction. An asymmetric absorption will lead to a kerf that is inclined with respect to the direction of incidence of the at least one melting beam.

In a further embodiment according to the invention, the polarisation of the at least one melting beam is controlled as a function of the angle enclosed by the plane of incidence and the cutting direction and/or the angle of incidence, wherein the angle of incidence and the plane of incidence are defined with respect to the work piece surface normal.

For example, cutting curves using a remote scanning system, the plane of incidence is often not parallel to the cutting direction. As a consequence, the melting beam will intersect the work piece at an angle with respect to the plane spanned by the cutting direction and the work piece surface normal, resulting in a tilted kerf. This artefact may be counteracted or even compensated for by controlling the polarisation angle as a function of the angle of incidence with respect to the work piece surface and/or the angle enclosed by the plane of incidence and the cutting direction, wherein the angle of incidence and the plane of incidence are defined with respect to the work piece surface normal.

Furthermore, linear polarisation of the melt ejection beam maybe used to optimise the coupling of the laser energy into the melt surface.

In a further embodiment according to the invention the at least one melt ejection beam is linearly polarised in a direction parallel to the plane of incidence (p-polarisation), wherein the plane of incidence is defined with respect to the work piece surface normal.

In a further embodiment according to the invention the at least one melt ejection beam is linearly polarised in a direction perpendicular to the plane of incidence (s-polarisation), wherein the plane of incidence is defined with respect to the work piece surface normal.

In a further embodiment according to the invention, the melt ejection beam comprises a plurality of melt ejection sub-beams, at least some of said melt ejection sub-beams being linearly polarised at a fixed angle with respect to the plane of incidence, the absolute value of said angle being comprised between 0° and 90°, alternative between 30° and 60°, alternative between 40° and 50°, wherein the plane of incidence is defined with respect to the work piece surface normal.

A plurality of melt ejection sub-beams may be applied to the processing region in order to provide a desired power density distribution to selected surface regions of the melt. The melt surface may have a complicated curved three-dimensional shape. In order to optimise the coupling of the laser power into the selected melt surface regions for each individual sub-beam, it is of great advantage to adjust the polarisation of the melt ejection sub-beams. This may for example be done by adjusting the polarisation according to the local melt surface normal, i.e by adjusting the polarisation of a sub-beam according to the orientation of the selected surface region where the melt ejection sub-beam interacts with the melt. Each of two melt ejection beams following the melting beam along the sidewall of the kerf, where the plane of incidence of said melt ejection beams is parallel to the cutting direction may thus have a polarisation that is rotated to either side with respect to the cutting direction, respectively. The angle between the plane of incidence and the orientation of the polarisation may be chosen to be 45° to either side pointing into the material of the work piece in a forward direction.

In a further embodiment according to the invention, the polarisation of each melt ejection beams is controlled as a function of laser cutting process parameters, said laser cutting process parameters comprising the angle enclosed by the plane of incidence and the cutting direction and/or the angle of incidence, wherein the angle of incidence and the plane of incidence are defined with respect to the work piece surface normal.

The coupling of melt ejection laser power into the melt surface may directly or indirectly depend on further parameters of the laser cutting process. Therefore it is of great advantage to control the polarisation as a function of these process parameters either in a pre-programmed fashion or through feed-back from in-line process monitoring means, such as a camera, a photodiode, an array of optical sensors, or alike.

Combinations of the above mentioned arrangements for polarisation of the at least one melting beam and the at least one melt ejection beam may be contemplated. The advantage of said combinations is obvious to a person skilled in the art.

In a further embodiment of the invention the method comprises providing an assist gas jet directed towards the laser processing region.

In a further aspect of the invention, the method for laser processing is laser welding of at least two abutting or overlapping work pieces in a welding direction. The processing region is a welding region, such as a welding spot or a welding seam for joining at least two abutting or overlapping work pieces. At least one of the multiple laser beams coupled into the welding region generates a melt in the at least two work pieces and forms a keyhole.

Above mentioned definitions for laser processing apply correspondingly for laser welding.

In a further embodiment according to the invention, the at least two laser beams are longitudinally arranged essentially in line with the welding direction so as to generate a common key hole.

In a further embodiment according to the invention the longitudinally arranged beams are focussed in different vertical levels. A common keyhole is formed and the laser processing energy is coupled into the work pieces in different vertical levels, whereby a common welding front is formed extending in an essentially vertical direction. By laser welding using such an arrangement of processing beams, deep and narrow welds may be achieved.

In a further embodiment according to the invention the at least two beams are arranged laterally with respect to the welding direction so as to provide separate keyholes. Providing a number of separate keyholes within the same melt pool may be used for generating a wider melt pool than what may be achieved with a single high intensity laser beam while stabilising the melt flow away from the welding front and around the processing beams to eventually solidify and form a weld bead. A stabilised melt flow will lead to an improved weld bead quality.

In a further embodiment according to the invention, the laterally arranged laser beams cross each other transversely of the welding direction. In practice, the crossing point is placed in the processing region or in the vicinity of the processing region just above or within the work pieces. Crossed laser beams may yield a weld cross-section that is essentially symmetric with respect to a horizontal plane. At high welding speed advantageously an additional high intensity laser beam may be arranged to precede the crossed beams in the welding direction.

Preferably according to the invention, at least two beams have a beam parameter product less than 10 mm*mrad, alternative less than 5 mm*mrad, alternative less than 1 mm*mrad. As mentioned above, a laser characterised by such values for the beam parameter product is in this application referred to as a high intensity laser.

Advantageously, the energy from a high intensity laser may be concentrated onto a small spot approaching the diffraction limit. Using multiple laser beams from high intensity lasers, an energy distribution may thus be provided to the processing region that may be determined according to the requirements of the welding process rather than being limited by an inappropriate beam shape of a single high power laser beam.

Further, according to the invention a laser processing system comprises multiple laser beams adapted to be guided to a processing region, wherein at least two laser beams are adapted to be coupled into the processing region to generate a melt and to form a keyhole.

Further, according to the invention a laser cutting system for cutting a work piece in a cutting direction comprises a laser beam emitting arrangement emitting a number of laser beams via at least one optical unit. At least one first laser beam, the so-called melting beam, is adapted to melt the work piece material and form a keyhole. At least one second laser beam, the so-called melt ejection beam, is adapted to heat one or more surface regions of the melt, whereby material is evaporated from the surface of the melt generating an evaporation-pressure for forcing the melt out of the processing region.

The laser cutting system further comprises a motion arrangement for moving said laser beams relative to the work piece. Such a motion arrangement may comprise a stationary optics and means for moving the work piece, or a stationary work piece and means for moving the optics, or means for moving the optics and means for moving the work piece. Furthermore, the above mentioned motion means may be combined with a scanning optics, such as a system of computer-controlled actuator driven mirrors. The combination may be an arrangement of a scanning optics on a robotic arm or on a Cartesian gantry system.

Further, in a laser cutting system according to the invention, at least two laser beams, so-called trimming beams, are arranged to follow the melting beam along the sidewalls of the kerf.

Further, according to the invention, a laser welding system for welding at least two abutting or overlapping work pieces in a welding direction comprises a laser beam emitting arrangement emitting at least two laser beams via at least one optical unit and a motion arrangement for moving said laser beams relative to the work pieces.

Further according to one aspect of the invention the laser beam emitting arrangement comprises at least two laser units each emitting a laser beam.

Further, according to one aspect of the invention, the laser beam emitting arrangement comprises at least one laser unit emitting a laser beam and a beam splitter splitting said beam into two or more beams.

Further, according to the invention, the laser beam emitting arrangement comprises at least one laser emitting a beam having a beam parameter product less than 10 mm*mrad, alternative less than 5 mm*mrad, alternative less than 1 mm*mrad.

Providing the laser energy to the processing region as individual laser beams that may be conditioned independently has the advantage that arbitrary energy distributions can be arranged without compromising beam quality and intensity. The energy distribution provided to the processing region may thus be determined according to the requirements of the process, such as cutting or welding, rather than being limited by an inappropriate beam shape of a single high power laser beam. In practice it may be preferred to provide the individual laser beams from high intensity laser sources as characterised by the above mentioned beam parameter product ranges, such as single mode fibre lasers or disc lasers, as they allow for concentrating the available power onto spots close to the diffraction limit.

In a further development of the above mentioned embodiment according to the invention, at least one laser beam is provided by a fibre laser.

In a further development of the above mentioned embodiment according to the invention, at least one laser beam is provided by a disc laser.

Further, a system according to the invention comprises means for providing an assist gas jet to the processing region.

Further, according to the invention, at least parts of the at least one optical unit are rotatable for collectively rotating the laser beams with respect to the at least one work piece around an axis which is perpendicular to the work piece surface at the processing region. In practice, the rotation axis may intersect the work piece at the cut-front or weld-front. In particular when laser processing is performed along curves, this embodiment has the advantage that the same arrangement of the beams is maintained with respect to the processing direction. A collective rotation of the laser beams with respect to the work piece can be achieved by an optical image rotator for rotating all laser beams around the same axis, or can be obtained by motion means, such as a robotic arm, for rotating the optical system, or a rotating work table, for rotating the work piece.

In a further aspect of the invention an optical unit for materials processing, such as laser cutting or laser welding, using multiple laser beams, comprises at least one optical input port, beam collimating optics, means for collectively rotating the laser beams, and focusing optics arranged at an output end.

Further, an optical unit according to the invention comprises a beam splitter, such as a polarising beam splitter, polarisation rotating elements, and an optical isolator unit comprising at least one Faraday rotator arranged between the collimating optics and the means for collectively rotating the laser beams.

Further, an optical unit according to the invention comprises means, such as a gas nozzle, for providing an assist gas jet directed to a processing region, said means for providing an assist gas jet being arranged concentrically around the laser beams.

Further, according to the invention computer controlled scanning optics is arranged at the output end of the optical unit, said scanning optics being adapted to collectively deflect the laser beams emitted through the focussing optics. An example for such scanning optics is an arrangement of mirrors actuated by means of galvano-motors.

The invention is now explained by exemplifying embodiments with reference to the drawings. The drawings show in
Fig. 1 a cross-section through a multiple beam laser cutting process according to one embodiment of the invention,
Fig. 2 a cross-section through a multiple beam laser cutting process according to another embodiment of the invention,
Fig. 3 a cross-section through a multiple beam laser cutting process according to a further embodiment of the invention,
Fig. 4 a cross-section through a multiple beam laser cutting process according to a further embodiment of the invention,
Fig. 5 a top view of a laser cutting process according to a further embodiment of the invention,
Fig. 6 a cross section through a multiple beam laser cutting process according to a further embodiment of the invention,
Fig. 7 a top view of keyholes and melt-pool as generated by a lateral arrangement of processing beams,
Fig. 8 a cross-section through a longitudinal in-line arrangement of laser beams in a cutting process according to a further embodiment of the invention,
Fig. 9 a cross-section through a longitudinal in-line arrangement of laser beams in a cutting process according to a further embodiment of the invention,
Fig. 10 a cross-section through a longitudinal in-line arrangement of laser beams in a welding process according to one embodiment of the invention,
Fig. 11 a cross-section through a longitudinal in-line arrangement of laser beams in a welding process according to a further embodiment of the invention,
Fig. 12 a top view of a p-polarised melting beam according to a further embodiment of the invention
Fig. 13 a top view of an s-polarised melting beam according to a further embodiment of the invention.
Fig. 14 a top view of a laser cutting process according to Fig. 3 with linearly polarised melt ejection beams.
Fig. 15 a laser processing system according to one embodiment of the invention,
Fig. 16 a laser processing system according to another embodiment of the invention,
Fig. 17 a laser processing system according to a further embodiment of the invention,
Fig. 18 optics for beam conditioning, rotation and focussing,
Fig. 19 optical unit according to one embodiment of the invention,
Fig. 20 optical unit according to another embodiment of the invention,
Fig. 21 optical unit according to a further embodiment of the invention,
Fig. 22 cross-section of a reflective polarising beam splitter in a plane of incidence,
Fig. 23 cross-section through the separated beams along line A-A in Fig. 22,
Fig. 24 arrangement of three laser beams for laser welding,
Fig. 25 arrangement for hybrid welding using two laser beams, and
Fig. 26 arrangement for laser fillet welding according to a further embodiment of the invention.

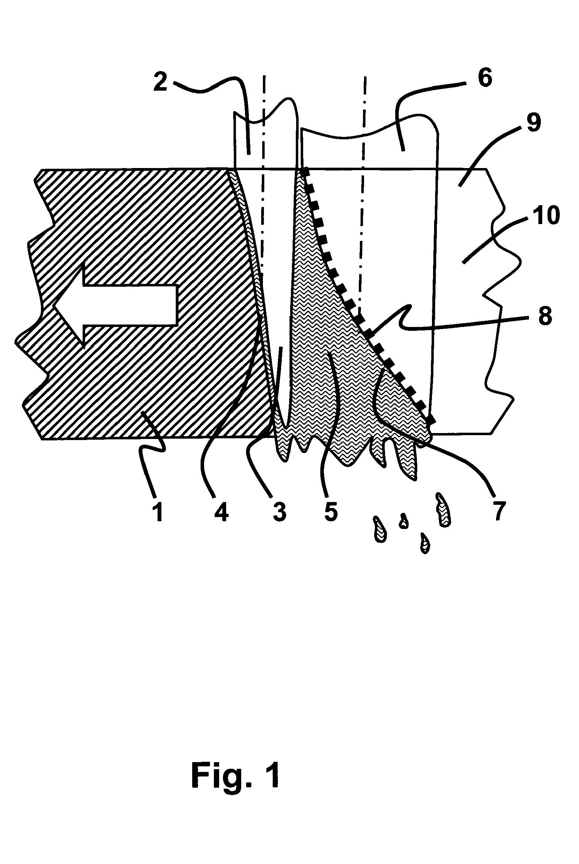

Fig. 1 shows a schematic cross-section for one embodiment of a laser cutting process according to the invention using two laser beams. A work piece 1 is exposed to a high intensity laser beam 2, the so-called melting beam, melting and evaporating some of the material from the work piece 1 thus forming a keyhole 3. Advancing the melting beam 2 in a cutting direction as indicated by the arrow in Fig. 1 makes a cut-front 4 propagating in that cutting direction. The melt 5 generated by the melting beam 2 flows around the melting beam 2.

A second laser beam 6, the so-called melt ejection beam, impinging on the melt surface 7 further heats the melt 5 within a thin layer from the surface 7 evaporating some of the material. In a thin layer above the melt surface 7, the so-called Knudsen-layer 8, the recoil force of the vapour molecules leaving the surface 7 generates a substantial evaporation pressure directed perpendicular to and into the surface 7. The evaporation pressure decays within a few mean free path lengths from the surface 7 corresponding to the thickness of the Knudsen-layer, due to collisions with other molecules in the gas phase surrounding the melt 5. The evaporation pressure acting on the melt surface 7 forces the melt 5 away from the selected surface region where the melt ejection beam 6 interacts with the melt 5. The melt 5 is thus forced to flow in a downward direction and eventually out of the work piece 1, thus removing material from the work piece 1 to form a kerf 9 with a cut-front 4 and sidewalls 10.

The cross-section of the melt ejection beam 6 may have a round shape, such as circular or elliptical, or an essentially quadrilateral shape, such as square, rectangular or trapezoidal.

The melt flow away from the cut-front 4 is predominantly horizontal along the sidewalls 10 of the kerf and merges behind the melting beam 2 to form a melt pool fully enclosing the melting beam 2. In the embodiment shown in Fig. 1 the melt ejection beam 6 is therefore directed downward onto a selected region of the melt surface 7 in a cutting direction behind the melting beam 2, i.e. opposite to the cut-front 4, in order to eject the melt 5 from the kerf 9 in a downward direction.

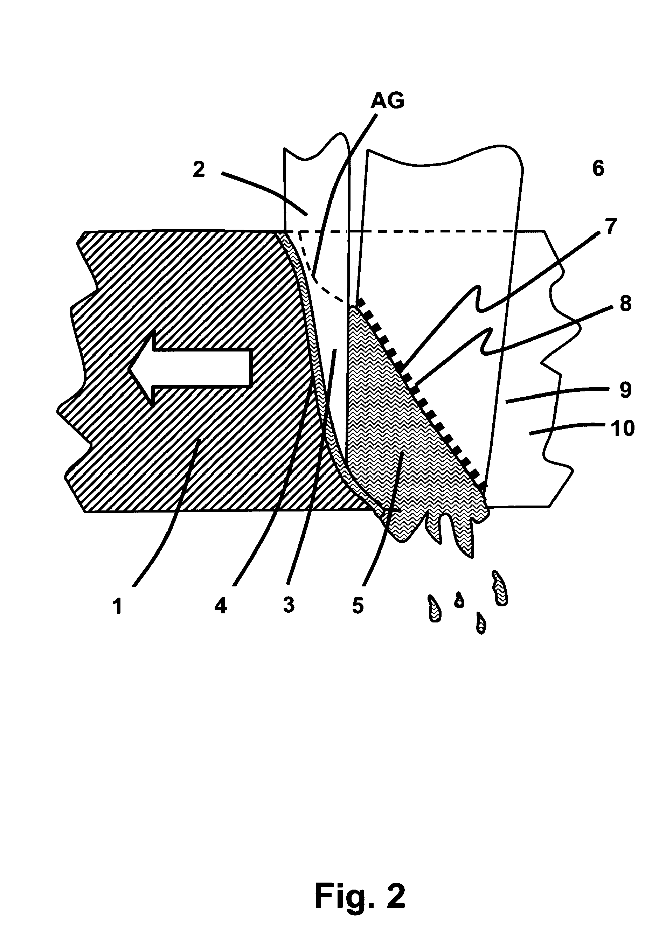

Fig. 2 shows a schematic cross-section for another embodiment of a laser cutting process according to the invention using two laser beams. In addition to the melt ejection beam 6 a supplementary assist gas jet is applied. The assist gas may be applied through a gas-nozzle arranged either off-axis with respect to the laser beams or, alternative, arranged essentially concentric around the laser beams. The assist gas applies an overall pressure to the melt 5 in addition to the melt ejection provided by the melt ejection beam 6 in the selected surface region of the melt surface 7. The assist gas forces the melt to flow downward as illustrated by the broken line AG in fig. 1 a.

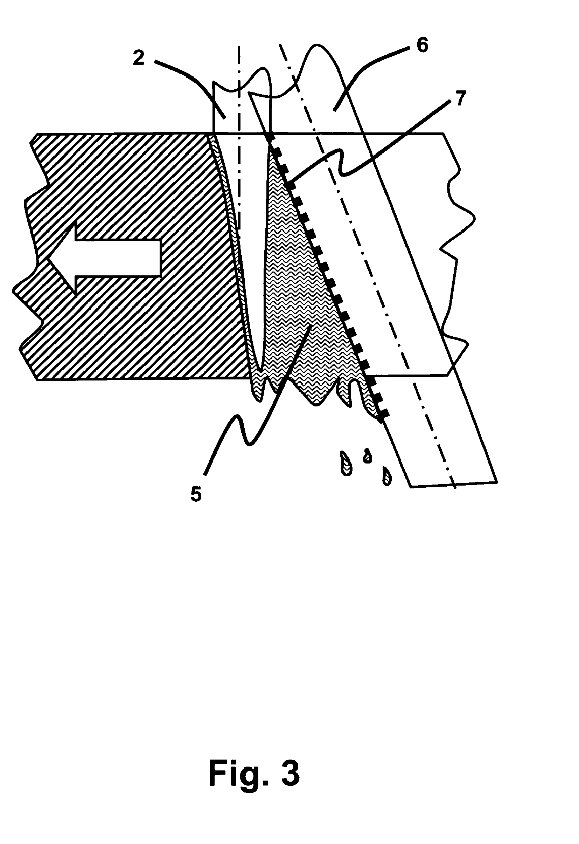

Fig. 3 shows a schematic cross-section of another embodiment of a keyhole laser cutting process according to the invention. The at least one melt ejection beam 6 is inclined with respect to the melting beam 2. The melt ejection beam 6 is directed downward and backward interacting with the surface of the melt 5 behind the melting beam 2 and establishing a melt surface 7 essentially parallel to the direction of the melt ejection beam. In practice, the diameter of the melt-ejection beam 6 will exceed the diameter of the melting beam 2 and cover the full width of the melt pool.

The cross-section of the melt ejection beam 6 may have a round shape, such as circular or elliptical, or an essentially quadrilateral shape, such as square, rectangular or trapezoidal.

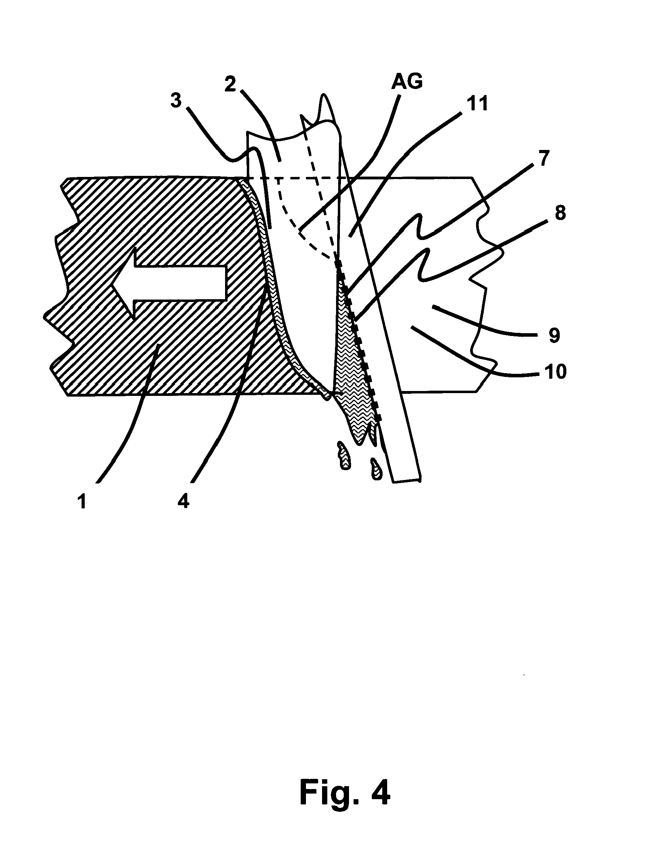

Fig. 4 shows a schematic cross-section of another embodiment of a keyhole laser cutting process according to the invention using three laser beams. Rather than directing one large melt ejection beam 6 to the melt pool behind the melting beam 2, the embodiment shown in Fig. 2 provides two melt ejection beams 11 a (shown) and 11 b (not shown) that are guided along the sidewalls 10 and downward through the kerf 9. Laser energy of the melt ejection beams 11 a, 11 b is coupled into the melt 5 and provides an evaporation pressure in a Knudsen-layer 8 for ejecting the melt 5 from the kerf 9. In addition to ejecting the melt 5 the melt ejection beams 11 a, 11 b may also remove material from the sidewalls 10 to trim the cut edges.

The melt ejection beams 11a, 11b are comparable to or smaller in diameter as compared to the melting beam 2. The melt ejection beams 11, 11 b may be arranged to overlap each other and/or the melt ejection may be further supported by the application of an assist gas. The assist gas may be applied off-axis, or through a concentric nozzle as described above.

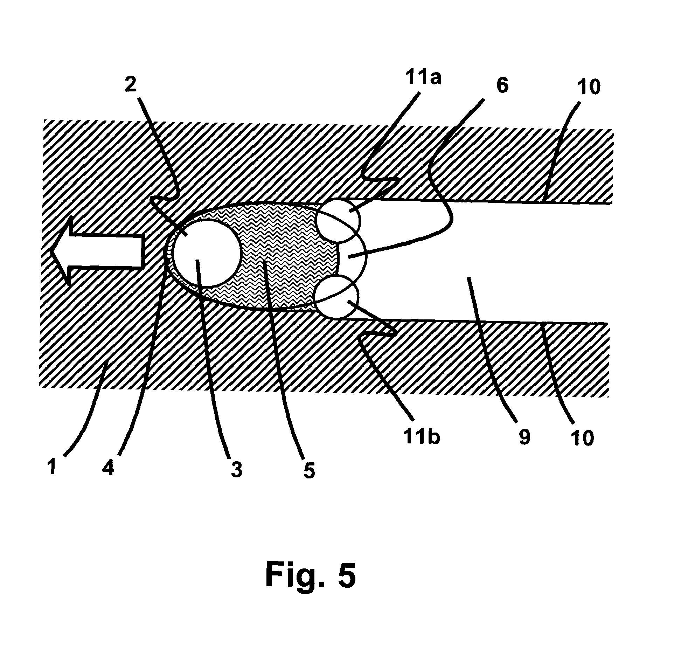

The two above-mentioned embodiments may also be combined to a laser cutting process using four laser beams as shown in Fig. 5 in a top view. A high intensity laser beam 2 melts and evaporates the material of the work piece 1 to form a keyhole 3 and a melt pool 5. The cut-front 4 propagates through the work piece 1 as the melting beam 2 is advanced through the work piece 1 dragging a melt pool 5 behind. A melt ejection beam 6 is arranged to essentially cover the melt 5 generated by the melting beam 2 to eject a major part of the melt 5 from the work piece 1 forming a kerf 9. In addition to the central melt ejection beam 6 two further melt ejection beams 11 a, 11 b follow the melting beam 2 along the sidewalls 10 of the kerf 9 in order to eject remaining melt from the sidewalls 10 and trim the cut edges.

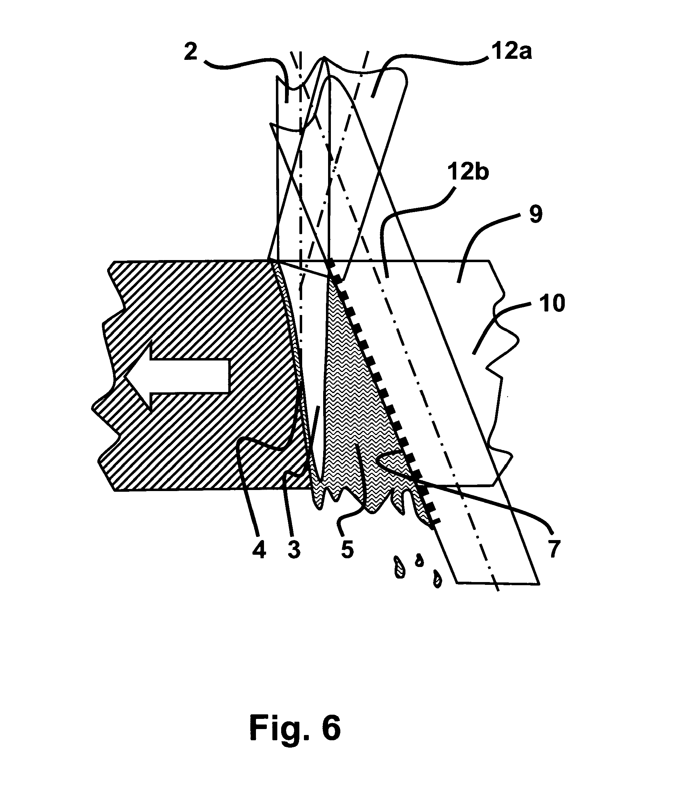

Fig. 6 shows a schematic cross section according to a further embodiment of the invention. The arrangement of melt ejection beams comprises two sub-beams: a first melt ejection beam 12a directed to the melt around the keyhole 3 in order to avoid melt 5 leaving the processing region in an upward direction, and a second melt ejection beam 12b arranged to follow the first melt ejection beam 12a in order to eject the melt 5 out of the kerf 9 in a downward direction. In practice, the first melt ejection beam 12a may be weaker in intensity than the second melt ejection beam 12b. Furthermore in practice, the first melt ejection beam 12a may be inclined to point in a forward direction in order to properly irradiate the melt 5 in and around the keyhole 3 and particularly at the cut-front 4. The second melt ejection beam 12b may be inclined to point in a backward direction establishing a melt pool surface 7 essentially parallel to the direction of the second melt ejection beam 12b.

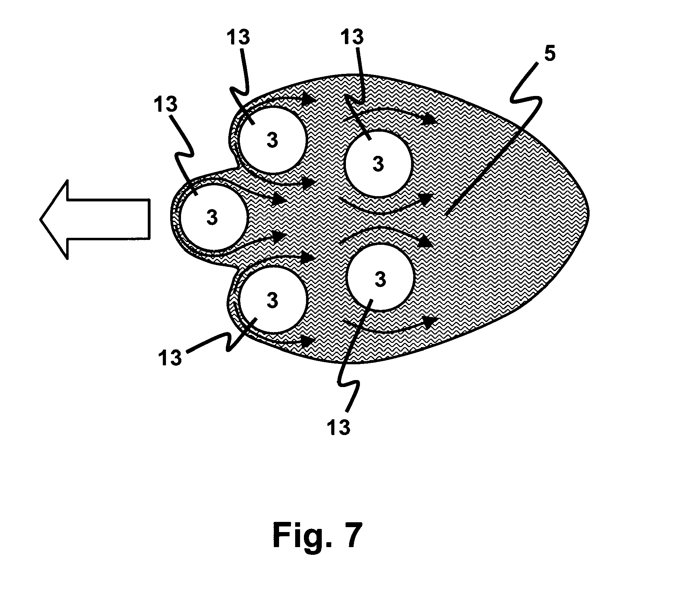

Fig. 7 shows a top view of a further embodiment of a laser processing arrangement according to the invention. A melt pool 5 is generated by a lateral arrangement of five melting sub-beams 13 advancing through a work piece 1 in a processing direction as indicated by the block arrow. Each of the lateral sub-beams 13 forms a keyhole 3. The melt 5 flows around the keyholes 3 as indicated by thin arrows. The lateral arrangement of keyholes 3 thereby acts like a sieve to control the flow while at the same time generating a large melt pool.

The arrangement of five sub-beams as shown in Fig. 7 is only one example for a lateral arrangement according to the invention. Other numbers and topographic variations of the lateral arrangement will be obvious to a person skilled in the art.

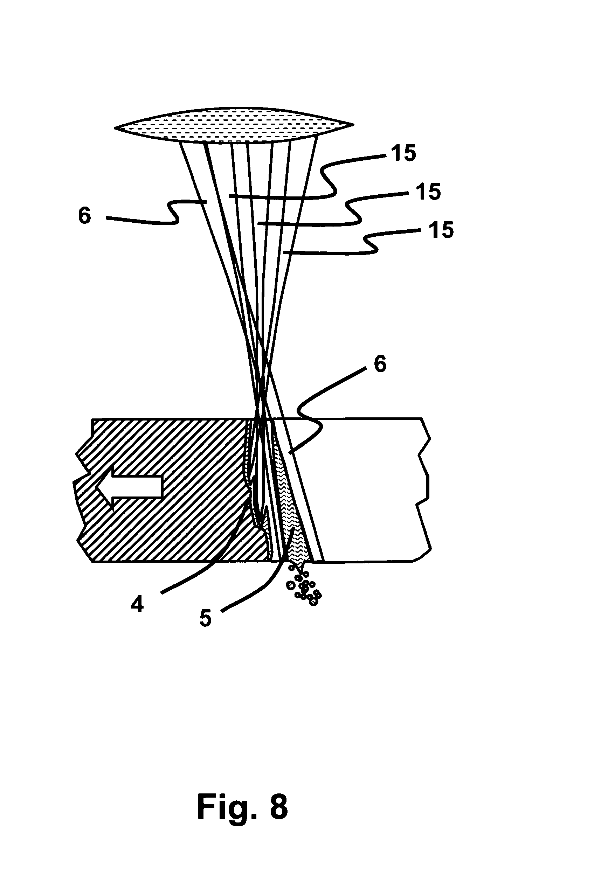

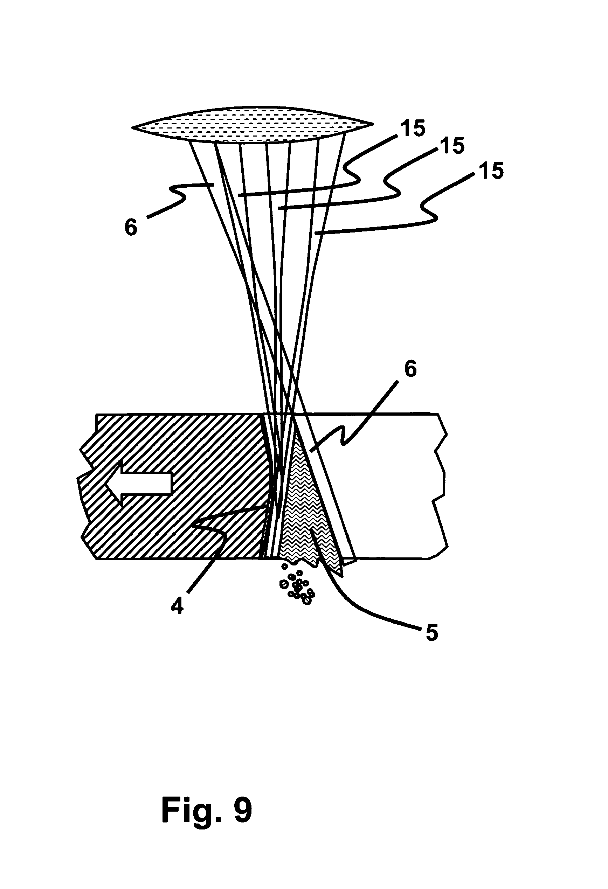

A further embodiment of a laser cutting process according to the invention with an advantageous arrangement of melting sub-beams is shown in Fig. 8 and Fig. 9. A number of melting sub-beams 15, here shown three sub-beams 15, are longitudinally arranged in line in a plane parallel to the cutting direction and are directed to the same keyhole 3. For illustration, a fourth beam is shown in Fig. 8 and Fig. 9 representing the at least one melt ejection beam 6.

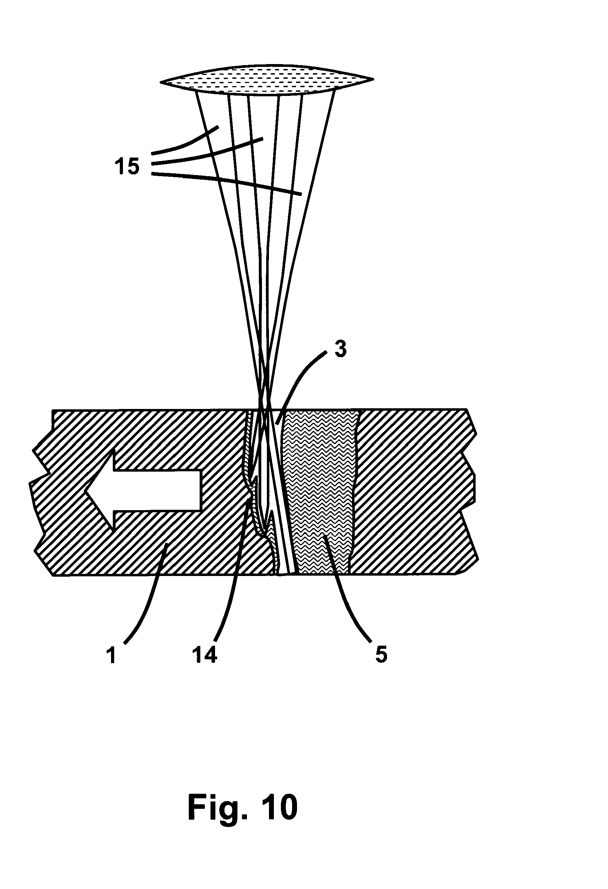

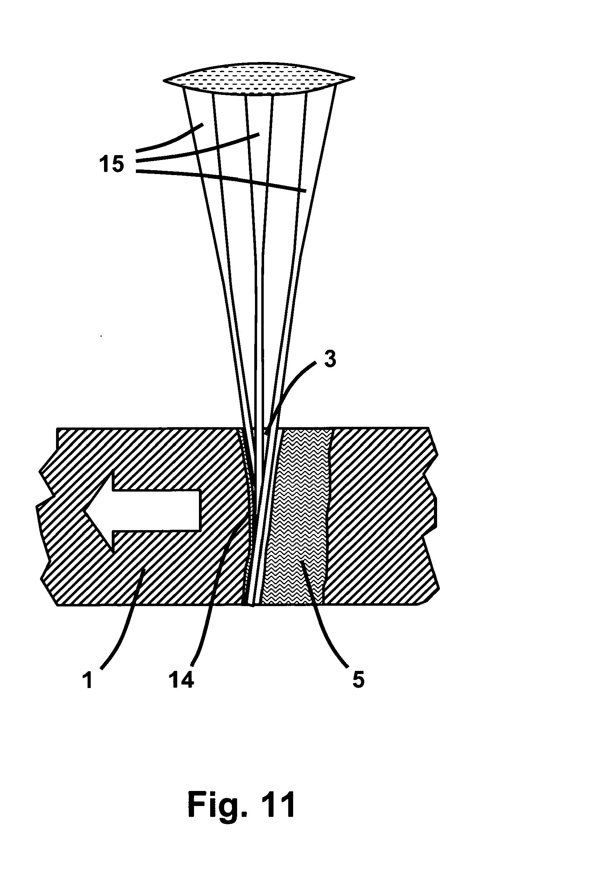

Fig. 10 and Fig. 11 show the analogue configuration for a laser welding process using longitudinally arranged melting sub-beams 15.

Both in the laser cutting process and in the laser welding process using a longitudinal arrangement of melting sub-beams 15, the different sub-beams 15 are focused to different vertical levels of the work piece 1 thus distributing the laser energy to essentially form a narrow line respectively defining the cut-front 4 and the weld-front 14 along the full depth of the keyhole 3. This way the amount of material vaporised within the keyhole 3 is reduced, thereby also reducing plasma formation due to absorption in the vapour.

In a further embodiment for a laser processing arrangement according to the invention the at least one melting beam and/or the at least one melt ejection beam is linearly polarised. Linear polarisation 16a allows for optimising the coupling of the laser energy into the material of the at least one work piece 1 for heating, melting and/or melt-ejection.

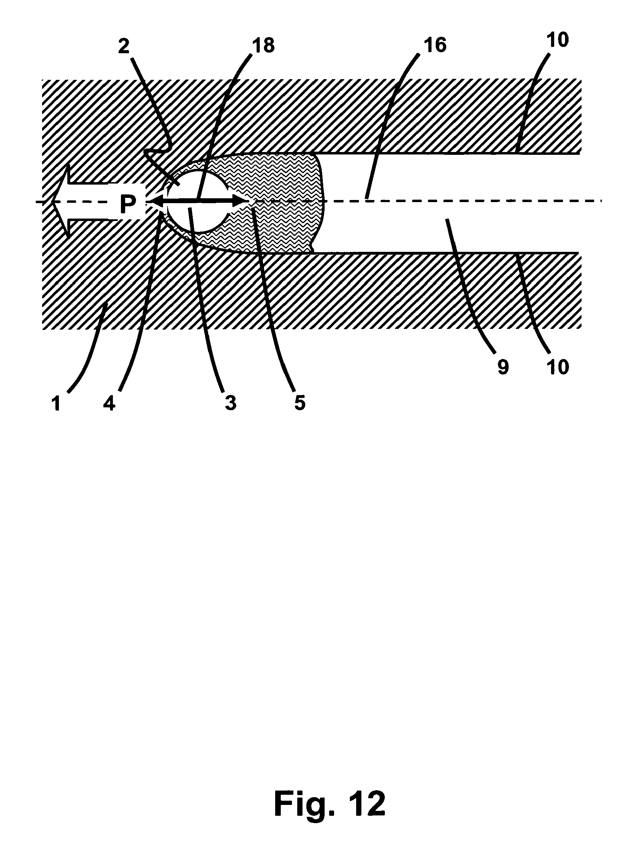

In the embodiment for a laser cutting process according to the invention shown in Fig. 12 a melting beam 2 is incident on a work piece 1 through a plane of incidence 16 which is aligned parallel to the cutting direction indicated by the block arrow. For clarity, only a melting beam 2 is shown in Fig. 12. The plane of incidence intersects the work piece 1 in the centre of the cut-front 4. The melting beam 2 is polarised in a direction parallel to the plane of incidence (p-polarisation, 18). P-polarisation 18 enhances the coupling of the melting beam 2 into the cut-front 4, thereby enhancing the cut-speed.

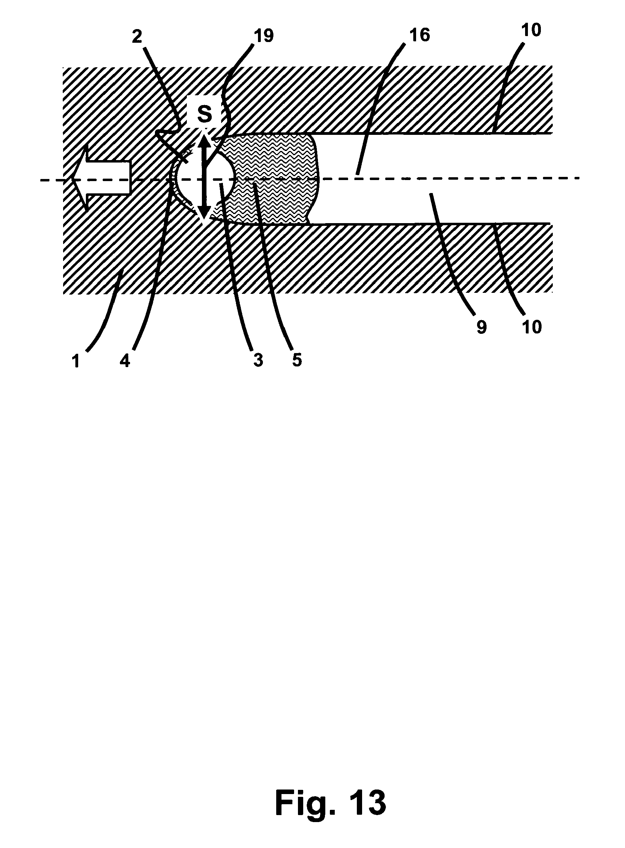

Similarly, Fig. 13 shows an embodiment according to the invention where the melting beam 2 is linearly polarised in a direction perpendicular to the plane of incidence (s-polarisation, 19). For clarity, only a melting beam 2 is shown in Fig. 13. S-polarisation 19 enhances the coupling of the melting beam 2 into the sidewalls 10 next to the melting beam 2, thereby obtaining a wider kerf 9.

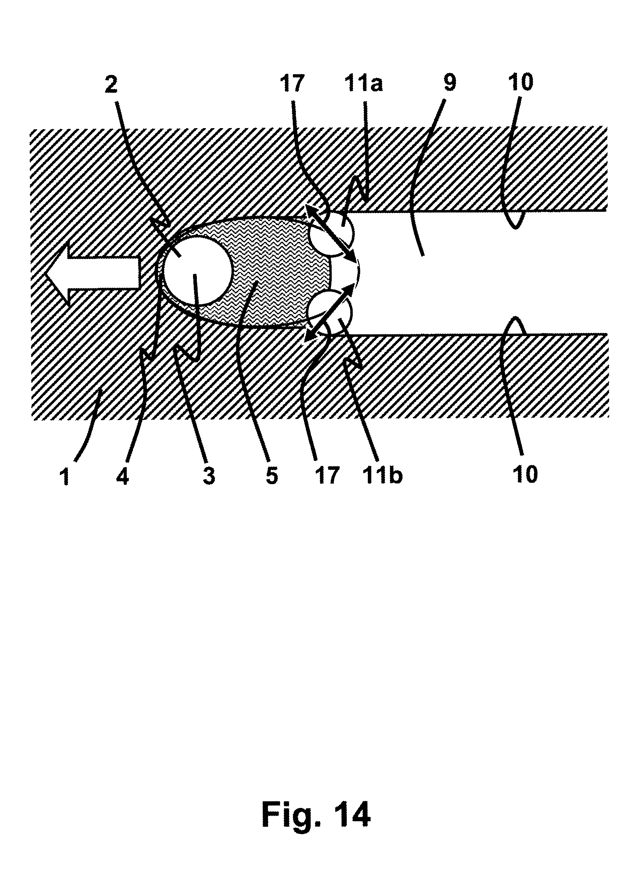

Fig. 14 shows schematically a top view of the process according to Fig. 5 comprising a melting beam 2, a melt ejection beam 6, and additional melt ejection beams 11 a, 11 b for cut edge trimming, wherein the melt-ejection beams 11a, 11b for cut-edge trimming are linearly polarised. The polarisation direction of each of the melt ejection beams 11 a, 11 b is rotated with respect to the cutting direction to point into the work piece material in a forward direction at an angle between 0° and 90°, alternative between 30° and 60°, and preferably between 40° and 50°.

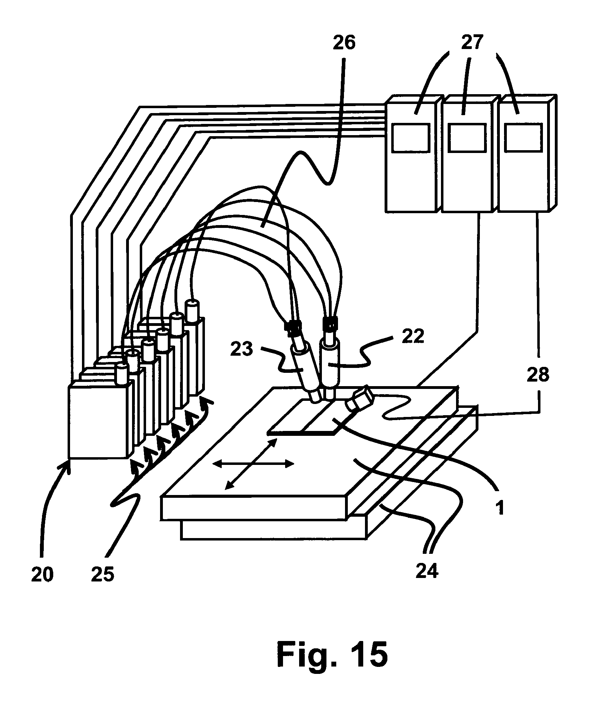

A laser processing system according to one embodiment of the invention is shown in Fig. 15. The laser processing system comprises a laser beam emitting arrangement 20 emitting a number of laser beams, beam conditioning and focussing optical units 22, 23, and a motion arrangement 24. The Laser beam emitting arrangement comprises a number of laser units 25, such as fibre laser modules or a combination of different laser sources, and includes beam guidance means 26, such as passive optical fibres, for delivering the laser beams separately to the beam conditioning and focussing optical units 22, 23. Alternative, the laser beam emitting arrangement 20 may comprise beamsplitter optics (not shown) for splitting a laser beam into a number of laser beams that are arranged and coupled into the beam conditioning and focussing optical units 22, 23.

The embodiment shown in Fig. 15 has two optical units 22, 23 for beam conditioning and focussing, wherein each of the optical units 22, 23 through optical fibres 26 is supplied with three separate laser beams. By means of the beam conditioning optics 22, 23, the laser beams are combined to an energy distribution that is tailored to the processing application, such as cutting or welding, and focussed onto the work piece 1. The optical unit 22 provides the at least one first laser beam, the so-called melting beam, which is adapted to melt the work piece material and form a keyhole, and the other optical unit 23 provides the at least one second laser beam, which for example in a cutting application may be the so-called melt ejection beam, which is adapted to heat selected surface regions of the melt, whereby material is evaporated from the surface of the material generating an evaporation-pressure for forcing the melt out of the processing region.

The work piece 1 is arranged on a work table that is provided with a motion arrangement 24. such as translation and/or rotation stages, for moving the work piece 1 with respect to the optical units 22, 23. It should be noted that the motion arrangement 24 may also be adapted to moving the optical units 22, 23 with respect to a fixed work piece. Alternatively the optical units 22, 23 may be provided with a remote scanning optics for scanning the laser beams over the work piece 1. A control unit 27 is provided to simultaneously control the laser beam emitting arrangement 20, optical units 22, 23, and motion arrangement 24 in order to process a work piece 1 along a desired processing curve.

An optional monitoring unit 28, such as a camera, a line camera, a photo sensor, an array of photo sensors, or alike, allows for monitoring the laser cutting process. Alternative to the off-axis arrangement as shown in Fig. 15, the monitoring unit 28 may be arranged in-line and/or integrated with at least one of the optical units 22, 23.

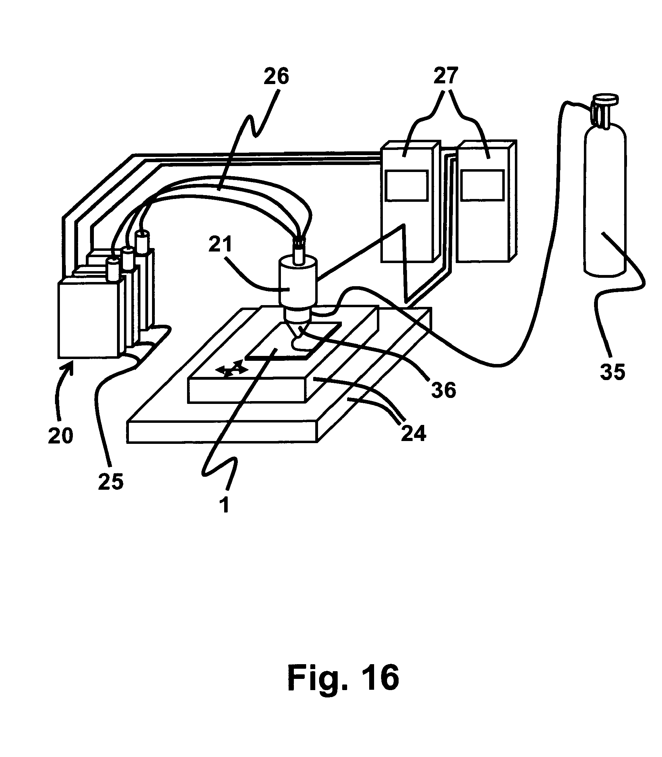

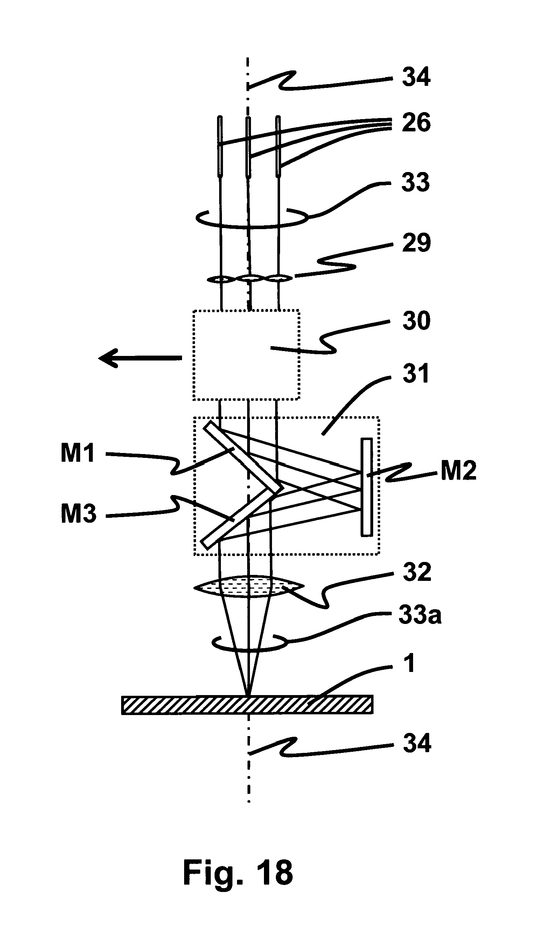

Reference is now made to Figs. 16-18. In practice it may be desirable to provide the at least one melting beam 2 and the at least one melt ejection beam 6 through a single optical unit 21. Fig. 16 shows a further embodiment of a laser processing system according to the invention, wherein the laser beams 33a are provided through a single optical unit 21. Referring to Fig. 18, the optical unit 21 may comprise collimators 29, optical isolator elements 30, such as Faraday rotators, a rotatable mirror system 31 or motorised beam and polarisation rotators, and focussing optics 32. The system also comprises an assist gas supply 35. The assist gas may be provided off-axis with respect to the laser beams 33a through a separate nozzle or, as shown in Fig. 16, through a gas nozzle 36 that is arranged at the end of the optical unit 21 facing the work piece 1 and essentially concentric around the laser beams 33a.

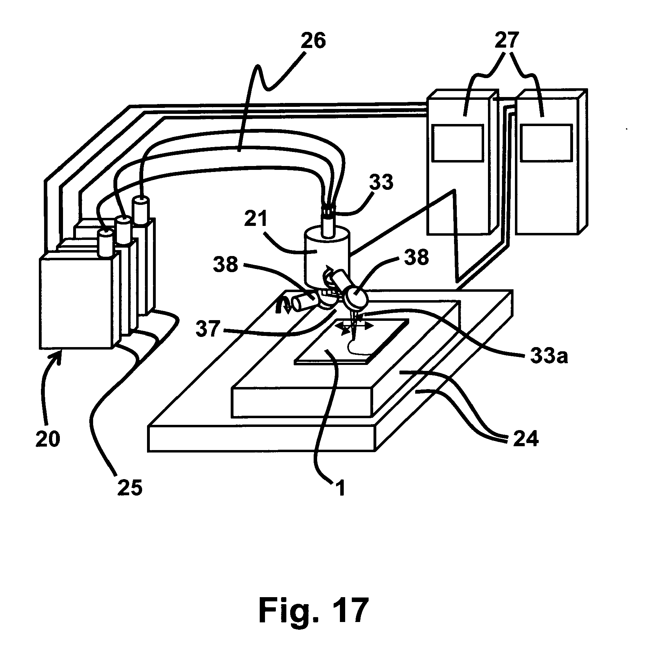

Fig. 17 shows a further embodiment of a laser processing system according to the invention. The system has a single optical unit 21. Referring to Fig. 18, the optical unit 21 may comprise collimators 29, optical isolator elements 30, such as Faraday rotators, motorised beam and polarisation rotators, such as a rotatable mirror system 31, and focussing optics 32.

The system shown in Fig. 17 is adapted to work without the use of assist gas. A remote scanning optics 37, such as motorised and computer controlled mirrors 38, is arranged between the optical unit 21 and the work piece 1. The remote scanning optics 37 is in combination with a computer control 27 adapted to move the lasers beams 33a over the work piece 1 surface along a processing curve. In addition to and/or in combination with the movement of the laser beams 33a with respect to the work piece 1 provided by the remote scanning optics 37, a further movement may be provided by means of a motion arrangement 24. The motion arrangement 24 may comprise means for moving the work piece, such as a multiple axis motorised work table as illustrated in Fig. 17, and or/ means for moving the optics, such as a robotic arm or on a Cartesian gantry system (not shown).

Fig. 18 shows an example of a beam conditioning and focussing optics 21 according to one embodiment of a laser processing system according to the invention. Three optical fibres 26 emit linearly polarised laser beams 33. Collimator optics 29 collimates and guides the laser beams 33 into an optical isolator element 30 that is adapted to prevent back-reflected light from propagating back and damage optical components in the laser cutting system.

In practice, said collimator optics 29 may comprise a collimator lens for each optical fibre 26, said collimator lens being adapted to collimate the diverging laser light 33 emerging from the end of the optical fibre 26 into a parallel beam, wherein after collimation, the laser beams are arranged to propagate essentially parallel to each other.

Said optical isolator element 30 may comprise a Faraday rotator that is adapted to selectively redirect polarised back-reflected light, for example towards a beam dump as indicated by the arrow. In a system operating with a number of different laser beams with different polarisations, the optical isolator element 30 may comprise a plurality of Faraday rotators, one for each polarisation.

A mirror system 31 is arranged to rotate the image and polarisation of the laser beams emerging from the optical isolator 30 around an optical axis 34.

The laser beams leaving the optical isolator 30 enter the mirror system 31 in a direction essentially parallel to the optical axis 34. A first mirror M1 is arranged on the optical axis 34 to deflect the laser beams by an angle slightly larger than ninety degrees onto a second mirror M2 which is placed at a distance from the optical axis 34 with its surface normal pointing towards the optical axis 34. The second mirror M2 is adapted to reflect the laser beams to a third mirror M3 which is arranged on the optical axis 34 in order to deflect the laser beams such that they again follow the direction of the optical axis 34. By rotating the mirror system 31 around the optical axis 34, the image of the laser beams 33a leaving the mirror system 31 is rotated with respect to the corresponding image of the laser beams 33 entering the mirror system 31.

Finally, the laser beams 33a leaving the mirror system 31 are focussed onto the work piece 1 by a focussing optics 32.

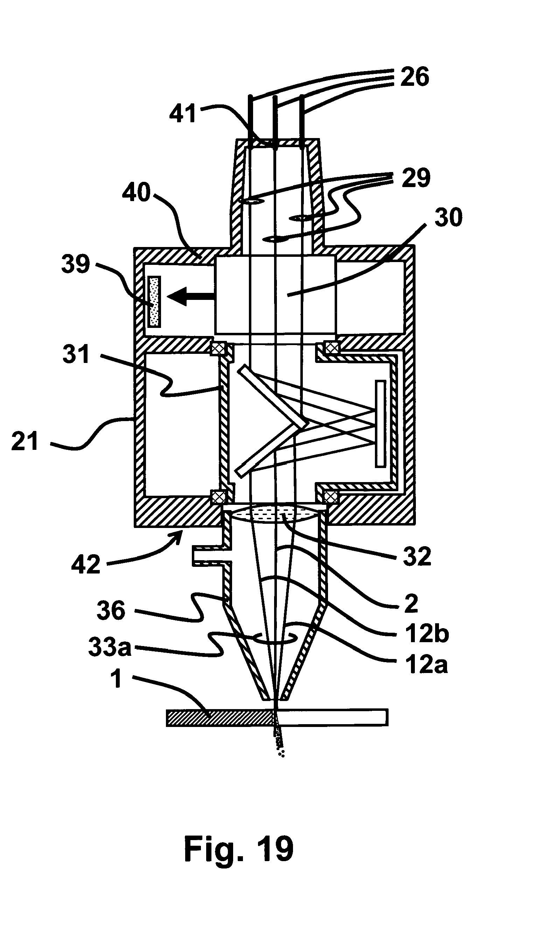

Reference is now made to Figs. 19 - 21. In a preferred embodiment according to the invention all laser beams 33a are provided via a single optical unit 21. The single optical unit 21 integrates essentially all required beam conditioning and focussing functions as well as handles the building of a desired energy distribution to be projected onto the processing region. In practice a single optical unit 21 acts as a laser processing head that may be detachably fixed on a laser processing system according to the invention. The laser processing head may comprise adjustable features for process control, and/or be designed for a given type of process, such as thin plate cutting, cutting in thick plates, heavy section welding, butt welding, welding of different materials, or alike.

In the following, a number of optical units are described as laser cutting type processing heads. It should be noted that the shown embodiments also may be used for welding applications.

Fig. 19 shows an optical unit 21 for laser cutting. Laser beams are delivered to the optical unit 21 via beam guidance means 26, such as optical fibres, connected to optical input ports 41 to enter a housing 40 of the optical unit 21. The housing 40 comprises optical elements as described with reference to Fig. 18, more specifically collimating optics 29, preferably one for each optical fibre, optical isolator units 30, such as Faraday-rotators, and an associated beam dump 39, rotatable mirror optics 31, and focussing means 32 at an output end 42. The optical unit 21 is thus adapted to provide a laser beam arrangement as shown in Fig. 6 with a centrally arranged melting beam 2 for keyhole formation, a primary melt ejection beam 12b that is tilted to point in a slightly backward direction, and a so-called surface melt ejection beam 12a that is directed towards the melting beam 2 spot on the work piece 1 surface and tilted to point in a slightly forward direction. Assist gas 35 may be provided through a gas nozzle 36 that is essentially coaxially arranged around the ensemble of laser beams 2, 12a, 12b. In a simpler embodiment corresponding to the process shown in Fig. 2 the surface melt ejection beam 12a and the corresponding optics may be omitted.

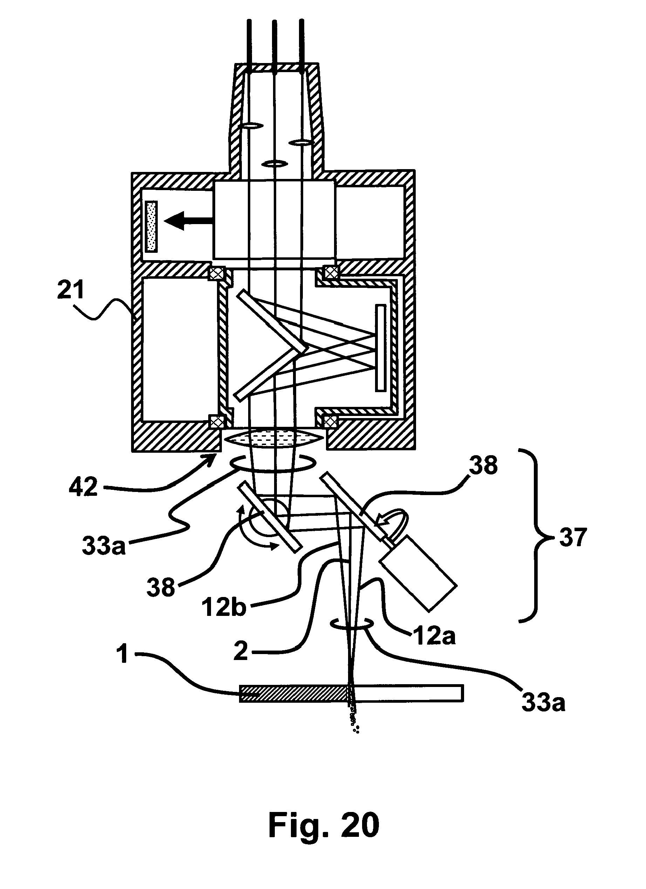

Fig. 20 shows a laser processing head adapted for remote scanning without assist gas 35 and is a variation of the laser cutting head shown in Fig. 19. Instead of the assist gas nozzle 36 remote scanning means 37 comprising motorised and computer controlled mirrors 38 is arranged at the optical out put end 42 of the optical unit 21. Optionally, assist gas may be applied through an off-axis nozzle (not shown). The laser processing head for remote scanning may for example be used in a system according to Fig. 17.

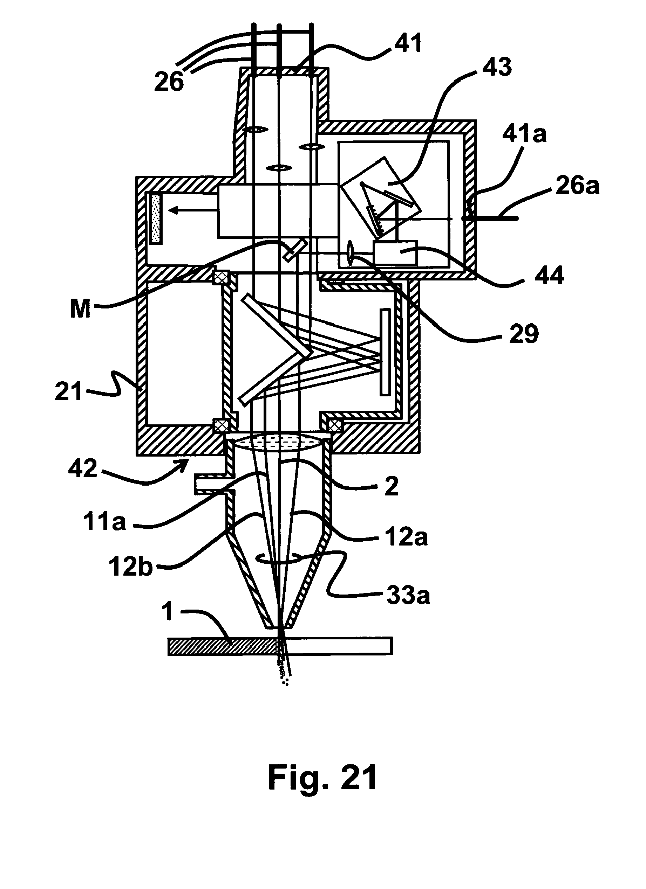

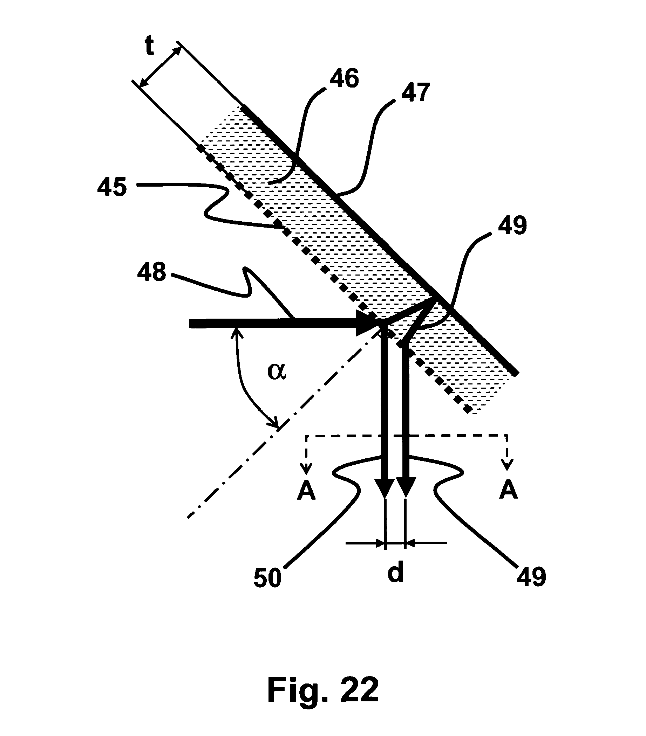

Fig. 21 shows a further development of the laser processing head according to Fig. 19. The laser processing head is adapted to provide a laser processing beam arrangement with five beams. In addition to the melting beam 2, the primary melt ejection beam 12b and the surface melt ejection beam 12a, laterally arranged edge trimming beams 11a and 11 b (not shown) may be provided via the optical unit 21. The edge trimming beams 11a, 11b are generated from a single laser beam provided through beam guidance means 26a and coupled into the optical unit 21 through an optical input port 41a. The single laser beam is split into two orthogonally polarised beams 49, 50 by means of a polarising beam splitter. The two beams 49, 50 are arranged with an adjustable mutual interspacing in a lateral direction, i.e. out of the drawing plane of Fig. 21. The polarising beam splitter 43 may for example split the incoming beam 48 by means of reflection from a thin film system 45, 46, 47 as explained below with reference to Fig. 22. The polarisation of the two orthogonally polarised beams 49, 50 may be rotated by means of a polarisation controller 44 to obtain edge trimming beams 11a, 11b of the desired orientation of the linear polarisation 17, such as shown in Fig. 14. Via a mirror M the edge trimming beams 11 a, 11 b are coupled into the beam path of the three other laser beams 2, 12a, 12b. The ensemble of five processing beams is then collectively projected and focussed onto the work piece 1 as described above with reference to Fig. 18. Assist gas 35 may be applied through a gas nozzle 36 that is coaxially arranged around the ensemble of laser beams at the out put end 42 of the optical unit 21.

It should be noted that the optical unit shown in Fig. 21 in analogy to the optical units shown in Fig. 19 and Fig. 20 and described above also may be combined with a remote scanning optics 37 arranged at the output end 42 of the optical unit 21.

Fig. 22 shows a thin film layer system adapted to split an incoming beam 48 into two orthogonally polarised beams 49, 50. The incoming beam 48 first hits a polarisation selective coating 45 at an angle of incidence α. The polarisation selective coating directly reflects a first beam 49 with a first linear polarisation (X-polarisation) and transmits a second beam 50 with a second linear polarisation (Y-polarisation) orthogonal to the first polarisation. The second beam is diffracted into a transparent layer 46 of thickness t according to Snell's law, reflected at a high reflection surface 47 on the backside of the transparent layer 47, and diffracted out of the transparent layer 46 to propagate parallel to the first beam 49 displaced by a distance d with respect to first beam 49 in the plane of incidence of the incoming beam 48. The distance d depends on the angle of incidence α, the thickness t and the refractive index of the transparent layer 46 and the surrounding medium. Rotating the thin film layer system with respect to the incoming beam therefore allows adjusting the distance d, while the choice of the layer 46 thickness t and the refractive index determines an adjustment range.

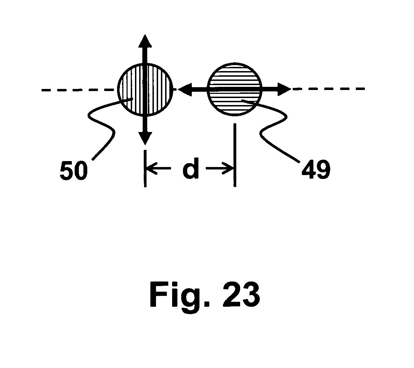

A cross-section of the mutually interspaced beams 49, 50 along line A-A in Fig. 2 is shown in Fig. 23.

By cascading beam splitter components 43 a multitude of mutually interspaced high intensity beams may be provided with adjustable mutual distances. Such an arrangement may therefore also be suited for providing for example an arrangement of sub-beams for primary melt ejection.

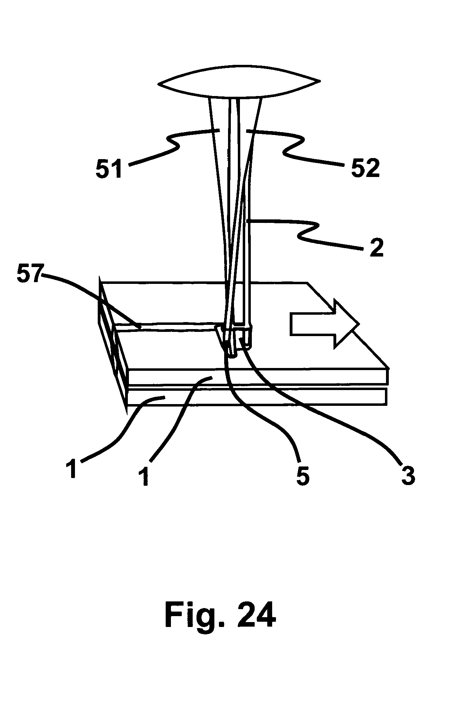

Reference is now made to Fig. 24 - Fig. 27 showing different examples for laser welding arrangements according to the invention.

Fig. 24 shows a laser beam arrangement of three laser beams for welding abutting or overlapping work pieces 1. A first melting beam 2 is applied centrally in the front forming a keyhole 3 and generating a melt 5 in the work pieces 1. Following the keyhole generating melting beam 2, two laser laterally displaced beams 51, 52 are tilted to cross each other in an essentially transverse direction with respect to the welding direction. In practice, the crossing point is placed in close vicinity to or inside the work pieces 1. The crossing beams 51, 52 can be arranged to generate a melt pool 5 that is essentially symmetric with respect to a plane lying parallel between the work piece 1 sheets. A melt pool, and thereby a weld seam, that is wider at the interface between the work pieces, and therefore stronger than in comparable single beam welds.

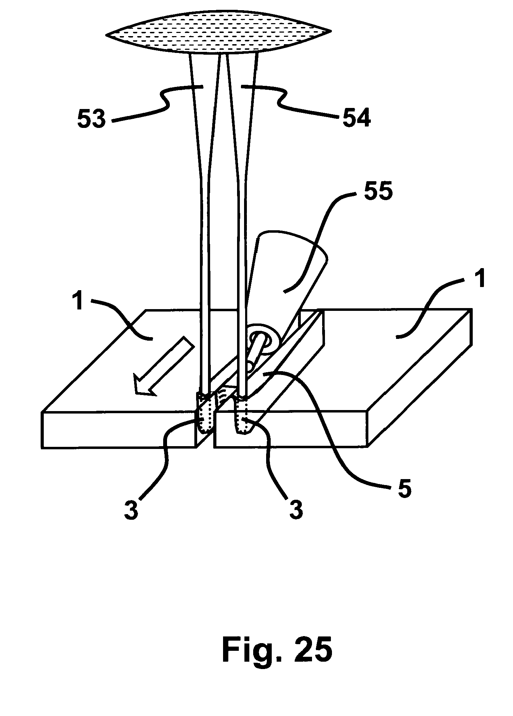

Fig. 25 shows an arrangement for improved hybrid welding combining laser beam welding using multiple laser beams according to the invention with other energy sources for welding, such as arc welding. In this technique two adjacent work pieces 1 are placed with a slight distance between their adjoining edges. In particular, such a gap between adjoining work pieces 1 may occur under common processing conditions in heavy industries. Filler material may be provided from a weld gun with filler wire 55 to fill that gap and strengthen the weld. Advantageously according to the invention, adjacent to or preceding the filler wire two diffraction limited laser beams 53, 54, are provided to each form a keyhole 3 respectively penetrating one of the work pieces close to the edge. Each laser beam 53, 54 may comprise a bundle of longitudinally arranged sub-beams according to or analogue to Fig. 10 or Fig. 11, in order to improve the penetration in thick work pieces 1 . The melt pool 5 formed around and in a processing direction behind each keyhole 3 is in a lateral direction wider than the keyhole 3 itself. Each of the laser beams 53, 54 is placed close to the edge of the corresponding work piece 1, such that a distinct keyhole 3 is formed and the melt 5 following the keyhole 3 extends all the way to the edge facing the gap. The melt 5 readily alloys with the filler material provided from the weld-gun 55 to form a strong weld seam.

By this improved hybrid welding arrangement according to the invention, also in heavy sections a weld seam with well defined edges is obtained exhibiting a cross-section that is essentially symmetric in the vertical and horizontal directions.

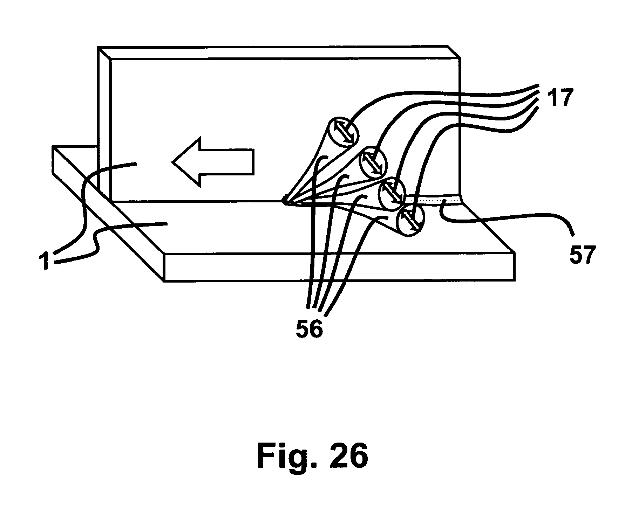

Another embodiment according to the invention that is particularly applicable in heavy industries is shown in Fig. 26, where a number of high intensity melting beams 56 are arranged to optimise the penetration of the laser energy into the work piece 1 by means of an arrangement similar to the arrangements shown in Fig. 10 and Fig. 11.

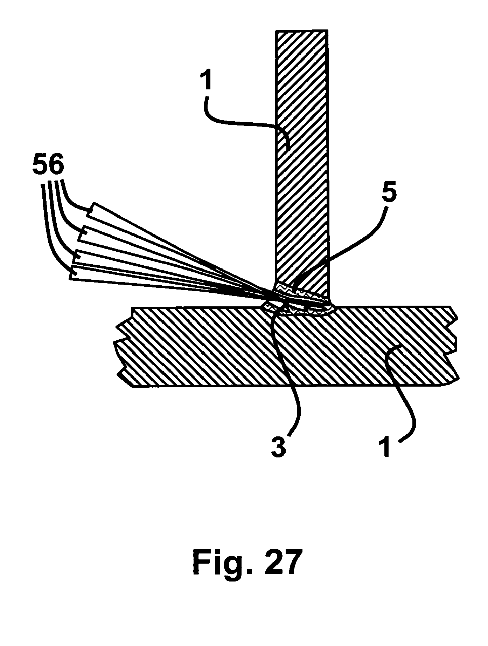

Fig. 26 shows an arrangement for heavy section fillet welding, for example for establishing a T-joint. An arrangement of a number of melting beams 56, here shown as four melting beams 56, is obliquely incident on the region of the T-joint to be processed. The four laser beams 56 are each incident at a different angle. The coupling of the laser energy into the work piece 1 material may be optimised by providing at least some of the melting beams 56 as linearly polarised beams and individually adjusting the linear polarisation 17 as a function of the respective angle of incidence. Fig. 27 shows a cross-section through the T-joint weld from Fig. 26 in a plane perpendicular to the welding direction.

The invention has been described with reference to preferred embodiments. However, the scope of the invention is not limited to the illustrated embodiments, and alterations and modifications can be carried out without deviating from said scope of the invention.

### List of reference numbers

- 1: work piece
- 2: melting beam
- 3: keyhole
- 4: cut-front
- 5: melt
- 6: melt ejection beam
- 7: melt surface
- 8: Knudsen layer
- 9: kerf
- 10: sidewall
- 11a, 11b: melt ejection beams
- 12a, 12b: melt ejection beams
- 13: lateral sub-beam
- 14: weld-front
- 15: longitudinal sub-beam
- 16: plane of incidence
- 17: linear polarisation
- 18: p-polarisation
- 19: s-polarisation
- 20: laser beam emitting arrangement
- 21, 22, 23: optical unit
- 24: motion arrangement
- 25: laser units
- 26, 26a: beam guidance means
- 27: control unit
- 28: monitoring system
- 29: collimator
- 30: optical isolator
- 31: rotating mirror optics
- 32: focussing optics
- 33, 33a: laser beams
- 34: optical axis
- 35: assist gas supply
- 36: gas nozzle
- 37: remote scanning optics
- 38: motorised mirror
- 39: beam dump
- 40: housing
- 41, 41 a: optical input ports
- 42: optical output end
- 43: polarising beam splitter
- 44: polarisation controller
- 45: polarisation selecting coating
- 46: transmitting layer
- 47: highly reflecting surface
- 48: incoming beam
- 49: reflected beam, X-polarised
- 50: reflected beam, Y-polarised
- 51, 52: crossing laser beams
- 53, 54: melting beams
- 55: weld gun with filler wire
- 56: melting beam
- 57: weld seam

- M, M1, M2, M3: mirrors

- AG: assist gas induced melt flow
- α: angle of incidence
- t: thickness of transmitting layer
- d: beam separation

## Claims

1. Method for laser processing using multiple laser beams guided to a processing region, wherein at least two laser beams are coupled into the processing region, whereby a melt is generated and at least one keyhole (3) is formed.

2. Method according to claim 1, wherein said laser processing is laser cutting of a work piece (1) in a cutting direction, wherein
- at least one first laser beam (2), the so-called melting beam, is coupled into the work piece (1) material to generate a melt (5) and to form a keyhole (3), and
- at least one second laser beam (6), the so-called melt ejection beam, is guided onto selected surface regions (7) of the melt (5), whereby material is evaporated from the surface (7) of the material generating an evaporation-pressure forcing at least part of the melt (5) out of the processing region, thereby forming a kerf (9) having a cut front (4) and sidewalls (10).

3. Method according to claim 2, wherein the at least one melt ejection beam (6) is guided onto selected surface regions (7) behind the melting beam (2).

4. Method according to claim 2 or 3, wherein at least two melt ejection beams (11a, 11b) are arranged to follow the melting beam (2) along the sidewalls (10) of the kerf (9).

5. Method according to any of the preceding claims, wherein the at least one melting beam (2) and/or the at least one melt ejection beam (6) has a beam parameter product less than 10 mm*mrad, alternative less than 5 mm*mrad, alternative less than 1 mm*mrad.

6. Method according to any of the preceding claims, wherein the at least one melting beam (2) and/or the at least one melt ejection beam (6) is provided by a fibre-laser.

7. Method according to any of the preceding claims, wherein the at least one melting beam (2) and/or the at least one melt ejection beam (6) is provided by a disc-laser.

8. Method according to any of the claims 2-7, wherein the melting beam (2) comprises a number of laterally arranged sub-beams (13).

9. Method according to claim 8, wherein each lateral sub-beam (13) is adapted to generating a separate keyhole (3).

10. Method according to any of claims 2-7, wherein the melting beam comprises a number of sub-beams (15) that are longitudinally arranged essentially in line with the cutting direction and directed to the same keyhole (3).

11. Method according to claim 10, wherein the focal spots of the longitudinally arranged sub-beams (15) are arranged in different vertical levels of the work piece (1).

12. Method according to any of the preceding claims, wherein the laser energy from at least one of the melting beams (2) and/or melt ejection beams (6) is provided in pulses.

13. Method according to any of the preceding claims, wherein the at least one melting beam (2) and/or the at least one melt ejection beam (2) is linearly polarised (17).

14. Method according to claim 13, wherein the at least one melting beam (2) is linearly polarised (18) in a direction parallel to the plane of incidence (16) of the beam (2), wherein the plane of incidence (16) at each instant is aligned with the cutting direction.

15. Method according to claim 13, wherein the at least one melting beam (2) is linearly polarised (19) in a direction perpendicular to the plane of incidence (16) of the beam (2), wherein the plane of incidence (16) at each instant is aligned with the cutting direction.

16. Method according to claim 13, wherein the linear polarisation (17) of the at least one melting beam (2) is controlled as a function of the angle enclosed by the plane of incidence (16) and the cutting direction and/or the angle of incidence, wherein the angle of incidence and the plane of incidence (16) are defined with respect to the work piece (1) surface normal.

17. Method according to claim 13, wherein the melt ejection beam (6) comprises a plurality of melt ejection sub-beams, at least some of said melt ejection sub-beams being linearly polarised (17) at a fixed angle with respect to the plane of incidence (16), the absolute value of said angle being comprised between 0° and 90°, alternative between 30° and 60°, alternative between 40° and 50°, wherein the plane of incidence (16) is defined with respect to the work piece (1) surface normal.

18. Method according to claim 13, wherein the linear polarisation (17) of each melt ejection beam (6) is controlled as a function of laser cutting process parameters, said laser cutting process parameters comprising the angle enclosed by the plane of incidence (16) and the cutting direction and/or the angle of incidence, wherein the angle of incidence and the plane of incidence (16) are defined with respect to the work piece (1) surface normal.

19. Method according to any of the preceding claims, wherein the method further comprises to provide an assist gas jet (35) directed towards the laser processing region.

20. Method according to claim 1, wherein said laser processing is laser welding of at least two abutting or overlapping work pieces (1) in a welding direction.

21. Method according to claim 20 wherein the at least two laser beams (15) are longitudinally arranged essentially in line with the welding direction so as to generate a common key hole.

22. Method according to 21 wherein the longitudinally arranged beams (15) are focussed in different vertical levels.

23. Method according to any of the claims 20 - 22, wherein the at least two beams are arranged laterally with respect to the welding direction so as to provide separate keyholes (3).

24. Method according to 23 wherein the laser beams (51, 52) cross each other transversely of the welding direction.

25. Method according to any of the claims 20 - 24, wherein at least two beams have a beam parameter product less than 10 mm*mrad, alternative less than 5 mm*mrad, alternative less than 1 mm*mrad.

26. System for laser processing comprising multiple laser beams adapted to be guided to a processing region, wherein at least two laser beams are adapted to be coupled into the processing region to generate a melt (5) and to form a keyhole (3).

27. System according to claim 26, wherein said laser processing is laser cutting of a work piece (1) in a cutting direction, said system comprising a laser beam emitting arrangement (20) emitting a number of laser beams (33a) via at least one optical unit (21, 22, 23), at least one first laser beam (2), the so-called melting beam, being adapted to melt the work piece material and form a keyhole (3), and at least one second laser beam, the so-called melt ejection beam (6), being adapted to heat selected surface regions (7) of the melt (5), whereby material is evaporated from the surface of the material generating an evaporation-pressure for forcing the melt out of the processing region, and a motion arrangement (24) for moving said laser beams (33a) relative to the work piece (1).

28. System according to claim 27, wherein at least two melt ejection beams (11a, 11 b) are arranged to follow the melting beam along the sidewalls of the kerf.

29. System according to claim 26 wherein the system is a laser welding system for welding at least two abutting or overlapping work pieces (1) in a welding direction, said system comprising a laser beam emitting arrangement (20) emitting at least two laser beams (33a) via at least one optical unit (21, 22, 23) and a motion arrangement (24) for moving said laser beams (33a) relative to the work pieces (1).

30. System according to any of the claims 26 - 29, wherein the laser beam emitting arrangement (20) comprises at least two laser units (25) each emitting a laser beam (33).

31. System according to any of the claims 26 - 29, wherein the laser beam emitting arrangement (20) comprises at least one laser unit (25) emitting a laser beam (33) and a beam splitter splitting said beam into two or more beams.

32. System according to any of the claims 26 - 31, wherein the laser beam emitting arrangement (20) comprises at least one laser unit (25) emitting a beam having a beam parameter product less than 10 mm*mrad, alternative less than 5 mm*mrad, alternative less than 1 mm*mrad.

33. System according to any of the claims 26 - 32, wherein at least one laser beam (33) is provided by a fibre laser.

34. System according to any of the claims 26 - 33, wherein at least one laser beam (33) is provided by a disc-laser.

35. System according to any of the claims 26 - 34, further comprising means (36) for providing an assist gas jet (35) to the processing region.

36. System according to any of the claims 26 - 35, wherein at least parts of the at least one optical unit (21, 22, 23) are rotatable for collectively rotating the laser beams (33a) with respect to the at least one work piece (1) around an axis which is perpendicular to the work piece surface at the processing region.

37. Optical unit (21) for materials processing, such as laser cutting or laser welding, using multiple laser beams (33a), wherein said optical unit (21) comprises at least one optical input port (41), beam collimating optics (29), means for collectively rotating the laser beams (31), and focusing optics (32) arranged at an output end (42).

38. Optical unit (21) according to claim 37, further comprising a beam splitter (43), such as a polarising beam splitter, polarisation rotating elements (44), and an optical isolator unit (30) comprising at least one Faraday rotator and arranged between the collimating optics (29) and the means for collectively rotating the laser beams (31).

39. Optical unit (21) according to any of the claims 37 - 38, further comprising means (36), such as a gas nozzle, for providing an assist gas jet (35) directed to a processing region, said means (36) for providing an assist gas jet (35) being arranged concentrically around the laser beams (33a) at an output end (42).

40. Optical unit according to any of the claims 37 - 38, wherein computer controlled scanning optics (37) is arranged at the output end (42), said scanning optics (37) being adapted to collectively deflect the laser beams (33a) emitted through the focussing optics (32).
